# DEMANDE DE BREVET EUROPEEN

(11) **EP 4 730 222 A1**
(43) Date de publication de la demande: **22.04.2026**
(21) Numéro de dépôt: 24306749.3
(22) Date de dépôt: 18.10.2024
(51) Int. Cl.: G06Q 10/04, G06Q 50/06

(54) **PROCÉDÉ D'ESTIMATION DE LA CONSOMMATION D'EAU D'UN BASSIN, TEL QU'UNE PISCINE**

(71) Demandeur: Fédération des Professionnels de la Piscine (FPP), 75009 Paris (FR)
(72) Inventeur: CHAVANET, Michaël, 93400 Saint Ouen (FR)
(74) Mandataire: Tranvouez, Edern Morgan

(57) **Abrégé**

L'invention concerne un procédé d'estimation de la consommation en eau d'un bassin telle qu'une piscine. Le procédé comprend :A. récupération d'informations dimensionnelles du bassin ; B. récupération d'une information de localisation du bassin, C. récupération d'une information d'utilisation d'une éventuelle couverture ; D. récupération d'informations de météorologie, température et pluviométrie, relatives à la localisation ; F. estimation, d'une quantité d'eau perdue par évaporation, G. estimation d'une quantité d'eau de pluie ajouté ; et L. fourniture d'une estimation de la consommation d'eau du bassin, ladite estimation de la consommation est réalisée à partir de l'estimation de la quantité évaporable du bassin à partir de la quantité d'eau évaporable estimée et de la quantité d'eau de pluie ajoutée estimée.

## Description

### Domaine technique

L'invention concerne le domaine de la gestion des bassins et notamment l'apport et la consommation en eau de tels bassins.

L'invention a plus particulièrement pour objet un procédé de d'estimation de la consommation d'eau d'un bassin, un produit programme permettant la mise en oeuvre d'un procédé, un support d'enregistrement informatique et un système d'estimation de la consommation en eau d'un bassin.

### État de l'art antérieur

La gestion des bassins d'eau, notamment artificiel, tels que les piscines, nécessite de prendre en compte la consommation en eau de ces bassins, ceci à la fois pour anticiper les besoins de régulation du remplissage du bassin et de renouvellement en eau de ce dernier, et pour informer les usagers des besoins associés à leur bassin. De plus, dans l'avenir, compte tenu de la pénurie en eau dans certaines régions, cette information pourrait devenir cruciale pour l'autorisation de l'installation et de l'usage d'un tel bassin.

Actuellement, si ce n'est l'expérience de l'installateur du bassin, qui connaît les contraintes liées à la localité dans laquelle est installé ledit bassin et celles techniques liées au bassin lui-même, il n'existe pas de moyen de connaître l'information sur la consommation en eau d'un bassin.

Il aurait besoin d'un moyen simple et fiable permettant de fournir une telle estimation.

### Exposé de l'invention

L'invention vise à remédier à cet inconvénient et a ainsi pour but de fournir un procédé qui autorise une estimation de la consommation en eau d'un bassin ceci sur une plage de temps donnée.

L'invention concerne à cet effet un procédé d'estimation de la consommation en eau d'un bassin, notamment du type piscine, sur une plage de temps donnée, ledit procédé étant mis en oeuvre par ordinateur, comprenant les étapes suivantes :
A récupération d'informations dimensionnelles du bassin et du volume d'eau qu'il est destiné à contenir,
B récupération d'au moins une information relative à la localisation du bassin,
C récupération d'au moins une information relative à l'utilisation d'une éventuelle couverture du bassin,
D récupération, à partir de l'au moins une information relative à la localisation du bassin, d'informations de météorologie relatives à la localisation du bassin, les informations de météorologie incluant des informations de température et des informations de pluviométrie relatives à la plage de temps donnée,
F estimation, sur la plage de temps donnée, d'une quantité d'eau perdue par évaporation du bassin sur la base des informations dimensionnelles, des informations de température et de l'au moins une information relative à l'utilisation de l'éventuelle couverture,
G estimation d'une quantité d'eau de pluie ajoutée au bassin pour une plage de temps donnée sur la base des de l'au moins informations dimensionnelles et des informations de pluviométrie,
L. fourniture d'une estimation de la consommation d'eau du bassin sur la plage de temps donnée, ladite estimation de la consommation est réalisée à partir de la quantité d'eau évaporable estimée et de la quantité d'eau de pluie ajoutée estimée.

Un tel procédé permet d'estimer à partir uniquement d'information aisément accessible pour l'installateur ou l'usager du bassin, à savoir l'emplacement du bassin, ses dimensions et l'équipement ou non d'une couverture, la consommation en eau du bassin. Ceci prend en compte à la fois l'apport en eau lié à la pluie que la perte en eau lié à l'évaporation. De cette manière, l'usager est à même d'anticiper les besoins en eau de son bassin et dimensionné l'alimentation en eau en fonction de cette consommation estimée. On notera de plus, que le présent procédé est également flexible puisque, en fonction des données météorologiques récupérées, à savoir des informations de pluviométrie et de température moyennes ou des informations de pluviométrie et de température exactes sur la plage de temps donnée, cette estimation peut être soit une estimation moyenne permettant, par exemple, de dimensionner le système d'apport en eau, soit une estimation précise pour permettre un apport en eau par exemple hebdomadaire ou mensuel en eau en fonction des conditions météo de la semaine ou du mois précédent. De même, lorsqu'il est précisément mesuré l'apport en eau du bassin, par exemple à partir d'un compteur d'eau, il est possible d'identifier une éventuelle fuite en comparant cette estimation précise avec la consommation réelle mesurée.

Le terme « couverture » doit s'entendre dans sa signification la plus large dans le domaine des bassins, et notamment des piscines, et couvre l'ensemble des éléments permettant de fournir une couverture de protection pour le bassin. Une telle couverture peut ainsi aussi bien être une couverture mobile telle qu'une bâche, des volets de protection, ou un abri mobile (ou télescopique), qu'un abri permanent, tel qu'un bâtiment dédier à la couverture de ladite piscine.

Préalablement à l'étape de la fourniture de l'estimation de consommation d'eau, le procédé d'estimation peut comprendre les étapes suivantes :
H. récupération d'une information relative à une fréquentation du bassin,
I. estimation d'une quantité d'eau perdue lors de l'utilisation pendant la plage de temps donnée basé sur la fréquentation d'utilisation du bassin,
dans lequel pour l'étape L. de fourniture de l'estimation de la consommation d'eau du bassin sur la plage de temps donnée, ladite estimation de la consommation est en outre réalisée à partir de l'estimation de la quantité d'eau perdue lors de l'utilisation du bassin.

De telles étapes permettent d'affiner la consommation en eau en évaluant la consommation en eau liée à l'utilisation du bassin.

Préalablement à l'étape de la fourniture de l'estimation de consommation d'eau, le procédé d'estimation peut comprendre les étapes suivantes :
J. récupération d'une information relative au traitement de l'eau mis en oeuvre dans le cadre de l'entretien du bassin,
K. estimation des besoins de renouvellement de l'eau du bassin sur la base des informations relative au traitement de l'eau,
dans lequel pour l'étape K. de fourniture de l'estimation de la consommation d'eau du bassin sur la plage de temps donnée, ladite estimation de la consommation est en outre réalisée à partir de l'estimation de la quantité d'eau perdue lors de l'utilisation du bassin.

De telles étapes permettent d'affiner la consommation en eau en évaluant la consommation en eau liée au traitement de l'eau du bassin.

La récupération d'une information relative au traitement de l'eau peut comprendre au moins l'une des informations suivantes :
- l'utilisation d'un système de filtration d'eau, cette information incluant préférentiellement le type de filtre et les caractéristiques associées à ce filtre,
- un type de traitement de l'eau en tant que tel,
- la présence ou non d'un système de pilotage automatisé, et/ou
- le renouvellement d'au moins une partie de l'eau du bassin pendant la plage de temps donnée, ce renouvellement excluant les ajoutent au lié à l'évaporation, l'entretien du filtre, l'abaissement du niveau d'eau en hiver, et
- la réalisation d'un abaissement du niveau d'eau en hiver.

De cette manière, il est possible d'estimer de manière fine la consommation en eau du bassin liée au traitement de l'eau du bassin.

Préalablement à l'étape F. d'estimation, sur la plage de temps donnée, d'une quantité d'eau perdue par évaporation du bassin, le procédé d'estimation peut comprendre les étapes suivantes :
E. récupération d'une information relative à l'utilisation d'un système de chauffe du bassin pendant la plage de temps donnée,

Dans lequel, lors de l'étape F., d'estimation, sur la plage de temps donnée, d'une quantité d'eau perdue par évaporation du bassin, l'estimation est également basée sur l'information relative à l'utilisation d'un système de chauffe du bassin pendant la plage de temps donnée,

Une telle étape permet d'évaluer l'évaporation, et donc la consommation en eau supplémentaire, liées à l'utilisation d'un système de chauffe du bassin.

Après l'étape L. de fourniture d'une estimation de la consommation d'eau du bassin sur la plage de temps donnée, le procédé comprend en outre une étape supplémentaire de :
M. commande de l'alimentation en eau du bassin basé sur la consommation en eau estimée à l'étape L.

Une telle commande permet de fournir une alimentation optimale en eau du bassin puisqu'elle prend en compte une consommation en eau précise du bassin obtenue au moyen du procédé selon l'invention.

l'invention concerne en outre un produit programme comprenant du code information configuré pour mettre en oeuvre les étapes d'un procédé de détermination selon l'une quelconque des revendications 1 à 6, le produit programme comportant des instructions pour réaliser les étapes suivantes :
A récupération d'informations dimensionnelles du bassin et du volume d'eau qu'il est destiné à contenir,
B récupération d'une information relative à la localisation du bassin,
C récupération d'au moins une information relative à l'utilisation d'une éventuelle couverture du bassin,
D récupération, à partir de l'au moins une information relative à la localisation du bassin, d'informations de météorologie relatives à la localisation du bassin, les informations de météorologie incluant des informations de température et des informations de pluviométrie relatives à la plage de temps donnée,
F estimation, sur la plage de temps donnée, d'une quantité d'eau perdue par évaporation du bassin sur la base des informations dimensionnelles, des informations de température et de l'information relative à l'utilisation de l'éventuelle couverture,
G estimation d'une quantité d'eau de pluie ajoutée au bassin pour une plage de temps donnée sur la base des d'informations dimensionnelles et des informations de pluviométrie,
L. fourniture d'une estimation de la consommation d'eau du bassin sur la plage de temps donnée, ladite estimation de la consommation est réalisée à partir de l'estimation de la quantité évaporable du bassin à partir de la quantité d'eau évaporable estimée et de la quantité d'eau de pluie ajoutée estimée
un tel produit programme permet la mise en oeuvre d'un procédé selon l'invention et d'obtenir les avantages qui y sont liés.

L'invention concerne en outre un support d'enregistrement informatique lisible par un ordinateur stockant le produit programme selon l'invention.

Un tel support permet la mise en oeuvre du produit programme selon l'invention est donc de bénéficier

L'invention concerne en outre un Système d'estimation de la consommation en eau d'un bassin, notamment du type piscine, sur une plage de temps donnée, le système comprenant une unité informatique configurée pour :
- fournir des instructions à une unité informatique secondaire de demander des informations dimensionnelles du bassin et du volume d'eau qu'il est destiné à contenir et récupérer les informations dimensionnelles du bassin et du volume d'eau obtenues lors de cette demande,
- fournir des instructions à l'unité informatique secondaire pour demander au moins une information relative à la localisation du bassin et récupérer I »au moins une information relative à la localisation du bassin obtenue lors de cette demande,
- fournir des instructions à l'unité informatique secondaire pour demander au moins une information relative à l'utilisation d'une éventuelle couverture du bassin et récupérer l'au moins une information relative à l'utilisation d'une éventuelle couverture du bassin obtenue lors de cette demande,
- récupérer, à partir de l'au moins une information relative à la localisation du bassin obtenue, d'informations de météorologie relatives à la localisation du bassin, les informations de météorologie incluant des informations de température et des informations de pluviométrie relatives à la plage de temps donnée,
- estimation, sur la plage de temps donnée, d'une quantité d'eau perdue par évaporation du bassin sur la base des informations dimensionnelles, des informations de température et de l'information relative à l'utilisation de l'éventuelle couverture,
- estimation d'une quantité d'eau de pluie ajoutée au bassin pour une plage de temps donnée sur la base des d'informations dimensionnelles et des informations de pluviométrie,
- détermination d'une estimation de la consommation d'eau du bassin sur la plage de temps donnée, ladite estimation de la consommation est réalisée à partir de l'estimation de la quantité évaporable du bassin à partir de la quantité d'eau évaporable estimée et de la quantité d'eau de pluie ajoutée estimée,
- fournir des instructions à l'unité informatique secondaire pour afficher l'estimation de la consommation d'eau du bassin sur la plage de temps donnée déterminée.

Un tel système permet de mettre en oeuvre le procédé selon l'invention et de bénéficier des avantages qui y sont liés.

L'unité informatique est configurée pour fournir les instructions à l'unité informatique secondaire au moyen d'un protocole de communication à distance, tel que le protocole de transfert hypertexte, plus connu sous son sigle http, en utilisant avantageusement un langage html ou du javascript.

Avec une telle unité informatique, l'usager est à même de profiter de la mise en oeuvre du procédé selon l'invention à partir d'un dispositif de communication, tel qu'un ordinateur personnel, un téléphone

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre schématiquement l'ensemble des éléments relatifs à la consommation d'un bassin, tel qu'une piscine qui peuvent être pris en compte dans le cadre d'un procédé d'estimation de la consommation en eau selon l'invention,
- La figure 2 illustre un ordinogramme des étapes du procédé d'estimation de la consommation en eau d'un bassin selon l'invention,
- la figure 3 illustre un système d d'estimation de la consommation en eau d'un bassin selon l'invention, et
- les figures 4A à 4F illustrent un exemple de mise en oeuvre du présent procédé basé sur des pages d'un questionnaire pour la fourniture des informations requises pour ledit procédé.

Les différentes possibilités (variantes et modes de réalisation) décrites ci-dessous doivent être comprises comme n'étant pas exclusives les unes des autres et peuvent se combiner entre elles

### Exposé détaillé de modes de réalisation particuliers

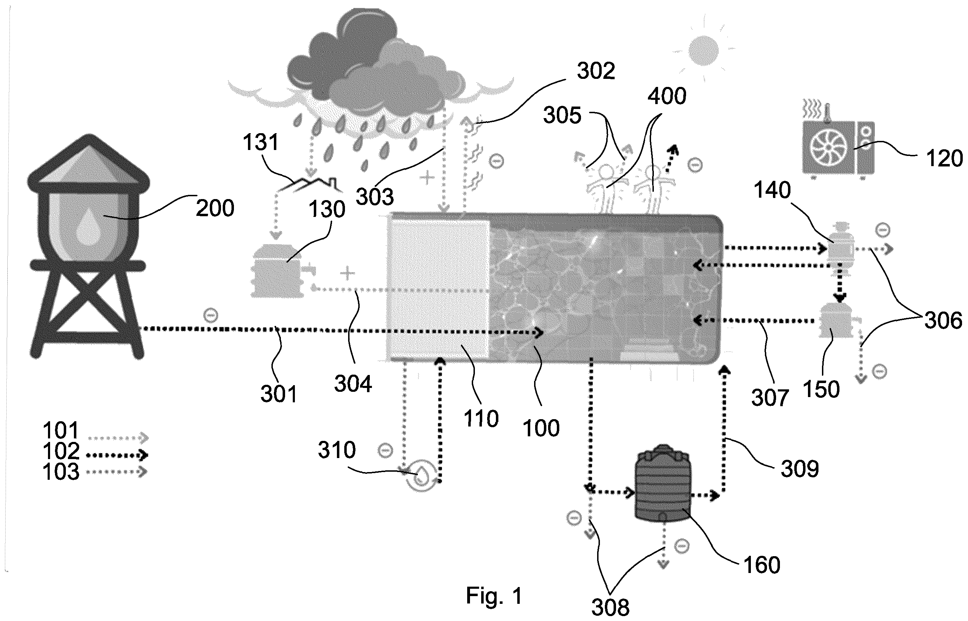

La figure 1 illustre schématiquement l'ensemble des éléments relatifs à la consommation d'un bassin, tel qu'une piscine 100, qui peuvent être pris en compte dans le cadre d'un procédé d'estimation de la consommation en eau selon l'invention, une consommation étant figurée par un moins et une récupération d'eau étant figuré par un +. Ces éléments comprennent :
- le premier remplissage 301 du bassin, ce premier remplissage se faisant généralement à partir du réseau d'eau potable 200 ou, de manière alternative, à partir d'un puits,
- l'évaporation 302 de l'eau du bassin, cette évaporation estimée pouvant prendre en compte l'équipement ou non d'une couverture 110 du bassin qui permet de réduire cette évaporation et la présence ou non d'un système de chauffe 120 qui l'exacerbe,
- la récupération d'eau de pluie 303 par le bassin,
- L'éventuelle récupération d'eau de pluie complémentaire 304, telle que par la toiture 131, lorsqu'il est prévu un tel système de récupération d'eau de pluie complémentaire 130,
- la consommation d'eau liée à l'usage 305, chaque usage du bassin par un usager 400 étant à l'origine d'une consommation d'eau,
- la consommation d'eau lié à l'entretien 306 du système de filtration 140 du bassin,
- la récupération des eaux issues des contres lavages 307, lorsqu'il est prévu un système de récupération 150 de telles eaux,
- les eaux perdues liées au débordement 308 du bassin et de l'éventuel système de récupération du trop-plein 160 (cuve),
- la récupération des eaux issues du trop-plein 309, lorsque le bassin est équipé d'un système de récupération du trop-plein 160, et
- la consommation en eau liée au renouvellement de l'eau du bassin 310, cette consommation pouvant notamment prendre en compte l'éventuelle réduction du volume d'eau en hivernage et étant dépendante des traitements de l'eau du bassin.

Bien entendu en fonction de l'information recherchée et de l'utilisation du présent procédé, certain élément peuvent ne pas être pris en compte. En effet, par exemple, dans le cas d'un contrôle de l'alimentation en eau du bassin, le procédé peut par exemple ne pas prendre en compte la consommation en eau liée au premier remplissage

Afin d'également illustré l'impact écologique de ces différents éléments de consommation d'eau, la figure 1 illustre également le type d'eau associé à ces différents éléments. Ainsi dans la figure 1, l'eau verte, c'est-à-dire l'eau issu de la nature généralement récupérée par la pluie, est figurée par des flèches grises claires, l'eau bleue, c'est-à-dire l'eau prélevée par l'homme par l'eau généralement issu du réseau d'eau potable ou d'un prélèvement d'eau tel que par un puit, est illustrée par des flèches noires, alors que l'eau grise, c'est-à-dire les eaux usées domestiques et recyclées, faible polluées et parfaitement réutilisable, sont illustrés par des flèches grises foncées.

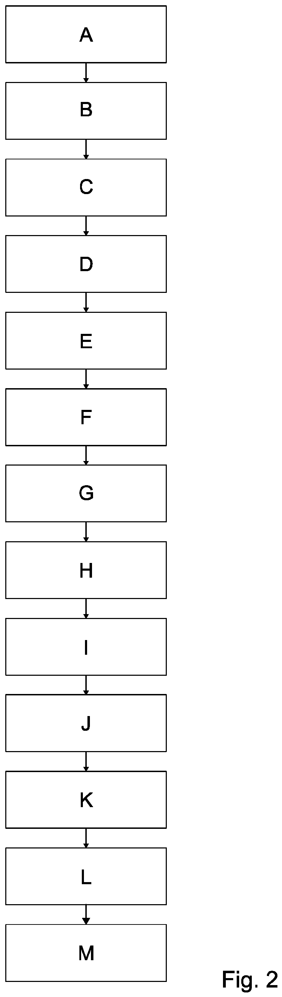

La figure 2 illustre un ordinogramme du procédé d'estimation de la consommation en eau d'un bassin selon l'invention.

Un tel procédé vise donc à fournir à un installateur, un propriétaire, des copropriétaires, voire à un gestionnaire, l'information sur la consommation en eau d'un bassin, tel qu'une piscine ou un autre type de bassin notamment artificiel, pour lequel cette information est nécessaire. Cette information, outre la fourniture d'une indication concernant l'impact écologique d'un tel bassin, permet à cet installateur, ce propriétaire, ces copropriétaires ou un gestionnaire de mieux estimer l'apport en eau nécessaire pour le bassin sur une plage de temps donnée.

Cette plage de temps donnée peut être une plage de temps non spécifiques, tel qu'une année, une saison ou encore un mois particulier, ou peut-être une plage de temps spécifique, tel que la semaine précédente ou le mois précédent, en fonction des besoins d'information de cet installateur, ce propriétaire, ces copropriétaires ou ces gestionnaires.

Dans le présent mode de réalisation, la plage de temps peut correspondre à une plage d'un an, le procédé étant à même de fournir une estimation de la consommation moyenne en eau du bassin pour une période d'un an.

Comme illustré sur la figure 2, le présent procédé comprend les étapes suivantes :
A récupération d'informations dimensionnelles du bassin et du volume d'eau qu'il est destiné à contenir,
B récupération d'au moins une information relative à la localisation du bassin,
C récupération d'au moins une information relative à l'utilisation d'une éventuelle couverture 110 du bassin,
D récupération, à partir de l'au moins une information relative à la localisation du bassin, d'informations de météorologie relatives à la localisation du bassin, les informations de météorologie incluant des informations de température et des informations de pluviométrie relatives à la plage de temps donnée,
E. de manière optionnelle, récupération d'au moins une information relative à l'utilisation d'un système de chauffe 120 du bassin pendant la plage de temps donnée,
F estimation, sur la plage de temps donnée, d'une quantité d'eau perdue par évaporation du bassin sur la base des informations dimensionnelles, des informations de température et de l'au moins une information relative à l'utilisation de l'éventuelle couverture 110 et, de manière optionnelle de l'au moins une information relative à l'utilisation d'un système de chauffe 120 du bassin,
G estimation d'une quantité d'eau de pluie ajoutée au bassin pour une plage de temps donnée sur la base des d'informations dimensionnelles, et des informations de pluviométrie,
H. de manière optionnelle, récupération d'au moins une information relative à une fréquentation d'utilisation du bassin,
I. de manière optionnelle, estimation d'une quantité d'eau perdue lors de l'utilisation pendant la plage de temps donnée basé sur la fréquentation d'utilisation du bassin obtenu à l'étape H.,
J. de manière optionnelle, récupération d'au moins une information relative au traitement de l'eau mis en oeuvre dans le cadre de l'entretien du bassin,
K. de manière optionnelle estimation des besoins de renouvellement de l'eau du bassin sur la base des informations relative au traitement de l'eau,
L. fourniture d'une estimation de la consommation d'eau du bassin sur la plage de temps donnée, ladite estimation de la consommation est réalisée à partir de l'estimation de la quantité d'eau évaporable du bassin à partir de la quantité d'eau évaporable estimée, de la quantité d'eau de pluie ajoutée estimée et de manière optionnelle, l'estimation d'une quantité d'eau perdue lors de l'utilisation obtenue à l'étape I. et/ou estimation des besoins de renouvellement de l'eau du bassin obtenue à l'étape K..

Lors de l'étape A, il peut être récupéré à la fois :
- une valeur de la surface du bassin, par exemple en mètre carré, et
- une contenance en eau du bassin, par exemple en mètre cube ou en litres.

Bien entendu, en variante, notamment pour des bassins de forme simples, tel qu'un bassin parallélépipédique, un bassin ovale..., il peut être récupérer des informations sur la géométrie du bassin afin de déterminer à partir de ces informations la surface et la contenance du bassin.

Lors de l'étape B, il peut être récupéré au moins une information relative à la localisation du bassin. Cette information relative à la localisation du bassin peut être :
- une adresse du lieu où se trouve le bassin,
- des coordonnées de localisation, telles qu'une latitude et une longitude, voire également une altitude, et/ou
- une indication géographique, telle que le nom d'une agglomération, d'un département ou d'une région, un code postal ou encore un numéro de département dans lequel se trouve le bassin.

Lors de l'étape C, il peut être récupéré au moins une information sur la présence d'une couverture sur au moins une partie de la plage de temps donnée. Si dans le présent mode de réalisation du procédé selon l'invention, cette information peut être une simple indication de la présence d'une couverture, selon une variante du présent procédé, l'information sur la présence d'une couverture peut inclure au moins l'une des informations suivantes :
- une indication d'un type de couverture,
- une indication concernant une durée d'équipement du bassin avec la couverture,
- une indication sur la configuration d'utilisation quotidienne de la couverture et/ou
- une information sur des caractéristiques de la couverture.

Dans le présent mode de réalisation, il peut être ainsi récupéré une information sur la présence d'une couverture et sur une durée d'équipement du bassin avec la couverture (en heures par jour).

En variante, dans le cas où la plage de temps donnée est une plage de temps spécifique, telle que la semaine précédente ou le mois précédent, l'au moins une information sur la présence d'une couverture peut être fournie au moyen d'un capteur d'état de la couverture ou d'un registre dans lequel sont enregistrer les changements d'état de la couverture (c.à.d. le passage du bassin de l'état couvert à l'état non couvert ou *vice versa*).

L'étape D de récupération, à partir de l'au moins une information relative à la localisation du bassin, d'informations de météorologie relatives à la localisation du bassin, selon le présent mode de réalisation, peuvent être des informations de température et des informations de pluviométrie relatives à la plage de temps donnée.

Les informations de température peuvent par exemple être des valeurs d'évaporation moyenne par surface liées à la température sur toute ou partie de la plage de temps donnée. Ainsi dans le présent mode de réalisation où la plage de temps donnée correspond à une année, l'étape D, en ce qui concerne les informations de température peut consister à récupérer les valeurs d'évaporation moyenne par unité de surface pour chaque mois de l'année, ces valeurs moyennes étant par exemple déterminées sur les cinq dernières années. En variante, il peut être récupérer des valeurs de température moyenne sur toute ou partie de la plage de temps donnée, une valeur d'évaporation du bassin pouvant être alors estimée à partir de ces températures moyennes.

On notera également, qu'en variante, dans le cas où la plage de temps donnée est une plage de temps spécifique, telle que la semaine précédente ou le mois précédent, cette au moins une information relative à l'utilisation d'un système de chauffe du bassin peut être obtenu au moyen d'une électronique dédiée, tel qu'un capteur par exemple du type thermomètre, ou encore un thermostat dudit système de chauffage. De cette manière, l'estimation est basée sur une mesure exacte réalisé sur le bassin.

Dans les deux cas, cette étape D. de récupération peut être mise en oeuvre par une interrogation de services de météorologie dédiés tels que ceux de « Meteo concept », voire par l'utilisation de capteurs dédiés, notamment lorsque la plage de temps donnée est une plage de temps spécifique.

Lors de l'étape E., il peut être récupéré au moins une information relative à l'utilisation d'un système de chauffe du bassin pendant la plage de temps donnée. Une telle information peut consister comme cela est le cas dans le présent mode de réalisation, par la récupération de l'information de l'équipement du bassin par un tel système de chauffage et de son utilisation.

Selon une variante, il peut être récupéré des informations complémentaires concernant cette utilisation d'un système de chauffe, telles que :
- le type de système de chauffe, l'évaporation de l'eau du bassin pouvant être directement affectée par le type de système de chauffe,
- une puissance du système de chauffe,
- une température de consigne dudit système de chauffe, l'évaporation de l'eau étant directement dépendant cette température de consigne, et/ou
- une période de temps pendant laquelle le système de chauffe est mis en oeuvre.

Cette au moins une information relative à l'utilisation d'un système de chauffe du bassin permet d'estimer l'évaporation supplémentaire provoquée par un tel système et de le prendre en compte dans le cadre de la consommation estimé du bassin.

On notera également, qu'en variante, dans le cas où la plage de temps donnée est une plage de temps spécifique, telle que la semaine précédente ou le mois précédent, cette au moins une information relative à l'utilisation d'un système de chauffe du bassin peut être obtenue au moyen d'une électronique dédiée, tel qu'un capteur par exemple du type thermomètre, ou encore un thermostat dudit système de chauffage. De cette manière, l'estimation est basée sur une mesure exacte réalisée sur le bassin.

Lors de l'étape F., à partir des informations dimensionnelles, des informations de température et, éventuellement, de l'au moins une information relative à l'utilisation d'un système de chauffe du bassin, il peut être estimé une quantité d'eau perdue par évaporation du bassin. Cette estimation peut être par exemple calculée sur la base d'une valeur de surface du bassin et des valeurs d'évaporation moyenne par surface liées à la température sur toute ou partie de la plage de temps donnée. En cas de présence d'une couverture, cette présence est prise en compte, puisqu'elle permet de réduire considérablement le phénomène d'évaporation (jusqu'à 90%). L'atténuation de ce phénomène entraine une baisse très significative de la consommation en eau du bassin, car le phénomène d'évaporation constitue le premier poste engendrant une consommation d'eau. Ainsi en cas d'utilisation d'une telle couverture, l'estimation peut être par exemple calculée sur la base d'une valeur de surface du bassin et des valeurs d'évaporation moyenne par surface liées et d'un facteur correctif pour tenir compte de la baisse d'évaporation permise par l'utilisation d'une telle couverture.

Lorsque l'au moins une information sur l'utilisation d'un système de chauffe du bassin a été récupérée, cette quantité d'eau perdue par évaporation du bassin déterminée pendant l'étape F. Peut-être majorée pour prendre en compte une telle utilisation.

Lors de l'étape G. d'estimation d'une quantité d'eau de pluie ajoutée au bassin pour une plage de temps donnée, il peut être estimé la quantité d'eau de pluie récupéré par le bassin lié à pluie. Cela peut être estimé à partir des informations de pluviométrie récupérées et de la surface du bassin.

De même lors de l'étape G. ou préalablement à l'étape G., par exemple dans le cadre de l'une des étapes D. et E., il peut également être prévu une sous-étape (ou une étape spécifique préalable à l'étape G.) non figurée de détermination de la présence d'un trop plein.

De cette manière, lors de l'étape G estimation, sur la plage de données, de la quantité d'eau de pluie ajoutée au bassin, il est également possible de prendre en compte la récupération d'eau permise par l'utilisation du trop-plein. La valeur fournie à l'issue de l'étape G. prenant ainsi en compte à la fois l'estimation de la quantité d'eau de pluie ajoutée au bassin pour une plage de temps donnée et celle récupérée au moyen du trop-plein si existant.

En outre de cette étape G. d'estimation d'une quantité d'eau de pluie ajoutée au bassin, en variante, il peut également être prévu préalablement à cette étape G., par exemple dans le cadre de l'étape C. de récupération d'au moins une information relative à l'utilisation d'une éventuelle couverture du bassin ou l'étape F. de récupération d'au moins une information relative à l'utilisation d'un système de chauffe du bassin, une sous-étape (ou une étape spécifique) non figurée de détermination de la présence d'équipements de récupération des eaux.

Dans le cadre de cette sous-étape (ou étape spécifique) il peut être par exemple déterminé si le bassin est équipé d'au moins l'un parmi :
- un système de récupération 150 de telles eaux contre lavages/lavages,
- un système de récupération des eaux de pluie complémentaire 130 destinée à alimenter le bassin et/ou
- toute autre système de récupération des eaux permettant le remplissage du bassin.

À partir, de l'information de la présence d'un équipement de récupération des eaux, il est possible dans le cadre de l'étape G. d'estimation d'une quantité d'eau de pluie ajoutée d'également prendre en compte la récupération d'eau supplémentaire permise par de tels équipements.

Afin de fournir une consommation du bassin plus précise, il peut également être tenu compte, à partir des étapes H. et I., de la consommation d'eau liée à l'utilisation bassin. En effet, un usager du bassin, en raison de ses entrées et sorties du bassins, les éventuels plongeons qu'il peut faire et les besoins de renouvellement d'eau et traitement d'eau liés à cette utilisation, va avoir pour conséquence une consommation supplémentaire de l'eau du bassin. On notera également, que pour des questions réglementaire et sanitaire, les piscines collectives requièrent un renouvellement de l'eau du bassin pour chaque usager. Ainsi, à partir de l'au moins une information d'une fréquentation du bassin, il est possible d'estimer une consommation en eau du bassin lié à son usage. Ces étapes, lorsqu'elles sont mises en oeuvre permettent ainsi d'améliorer l'estimation de la consommation du bassin qui peut être obtenue avec le procédé selon l'invention.

L'au moins une information de fréquentation du bassin peut être :
- un nombre d'usager moyen sur au moins une partie de la plage de temps donnée,
- un temps de fréquentation moyen pour chaque usager, et/ou
- une quantité d'eau utilisée en raison de la fréquentation du bassin.

Dans le cadre du présent procédé, par exemple, cette information peut inclure un nombre de jours d'utilisation du bassin par semaine sur la période allant de mai à septembre et un nombre d'usager journalier moyen pour chaque jour d'utilisation du bassin. Sur la base d'une telle information de fréquentation et sur une moyenne d'eau perdu pour chaque usage du bassin, il est aisé d'estimer la quantité d'eau perdue liée à la seule utilisation du bassin sur la plage de temps donnée.

On notera que, selon la variante où la plage de temps donnée est une plage de temps spécifique, la fréquentation peut être une fréquentation réelle du bassin sur ladite plage de temps donnée afin d'estimer la quantité d'eau réellement perdue liée à l'usage du bassin sur cette plage de temps.

Dans ce cadre, de ces étapes H. et I. l'estimation de la quantité d'eau perdue en raison de l'usage du bassin peut être à la fois basée sur des données empiriques, connues de l'homme du métier, et sur les données réglementaires concernant les besoins en renouvellement en eau.

D'une manière identique, les étapes J. et K. permettent, à partir de l'au moins une information sur le traitement de l'eau du bassin, de déterminer la quantité d'eau perdue dans le cadre de l'entretien du bassin.

Lors de ces étapes l'au moins une information sur le traitement de l'eau du bassin peut comprendre notamment au moins une information sélectionnée parmi :
- un type de filtres équipant la piscine,
- les caractéristiques de ce filtre,
- un type de traitement de l'eau,
- la présence ou non d'un système de pilotage automatisé, et/ou
- le renouvellement d'au moins une partie de l'eau du bassin pendant la plage de temps donnée (renouvellement excluant les ajouts liés à l'évaporation, l'entretien du filtre, l'abaissement du niveau d'eau en hiver).

Plus spécifiquement, l'étape J. récupération d'une information relative au traitement de l'eau peut ainsi comprendre au moins l'une des informations suivantes :
- - l'utilisation d'un système de filtration d'eau, cette information incluant préférentiellement le type de filtre et les caractéristiques associées à ce filtre,
- - un type de traitement de l'eau en tant que tel,
- - la présence ou non d'un système de pilotage automatisé, et/ou
- - le renouvellement d'au moins une partie de l'eau du bassin pendant la plage de temps donnée, ce renouvellement excluant les ajoutent au lié à l'évaporation, l'entretien du filtre, l'abaissement du niveau d'eau en hiver, et
- - la réalisation d'un abaissement du niveau d'eau en hiver.

Le type de filtres équipant la piscine peut être par exemple : un filtre à sable, un filtre à verres, un filtre à cartouche, un filtre poche filtrante, ou un autre type de filtre. En fonction du type de filtre, peut-être en outre récupérer les informations relatives à ceux ou ces filtres. Par exemple, dans le cas où le filtre est du type filtre à cartouche, les caractéristiques du filtre peuvent comprendre :
- une valeur de débit (par exemple en litres par minute),
- une valeur de durée des lavages (par exemple minute),
- fréquence des lavages,
- une capacité en litres du bassin de détartrage,
- un nombre de bains de lavages, et
- un nombre de cartouches.

A partir du type de filtre équipant le bassin et d'éventuellement les caractéristiques de ce filtre (et notamment des conditions d'utilisation), il est possible d'aisément estimer sur la plage de temps donnée la quantité d'eau perdue pour le bassin qui est liée à la filtration de l'eau.

Le type de traitement de l'eau peut par exemple être sélectionné parmi :
- du chlore stabilisé haut de gamme (99 %),
- du chlore stabilisé haut de gamme (99 %) avec chlorinateur,
- du chlore stabilisé haut de gamme (95 %)
- du chlore stabilisé haut de gamme (95 %) avec chlorinateur,
- du chlore stabilisé moyenne gamme (80 %) sans acide cyanurique supplémentaire,
- du chlore stabilisé moyenne gamme (80 %) permet la parenthèse sans acide cyanhydrique supplémentaire avec chlorinateur,
- du chlores stabilisé pas de gamme (75 %) sans acide cyanurique supplémentaire,
- du chlore stabilisé bas de gamme (75 %) sans acide cyanurique supplémentaire et avec chlorinateur,
- galets de brome,
- galets de brome avec bromisateur,
- du chlore non stabilisé solide (70 %) avec de l'acide chlorhydrique,
- du chlore non stabilisé solide (70 %) avec de l'acide sulfurique,
- du chlore non stabilisé solide (70 %) avec de l'acide sulfurique et 20ppm de stabilisant,
- du chlore non stabilisé solide (70 %) avec de l'acide chlorhydrique et 20ppm de stabilisant,
- du chlore stabilisé solide (70 %) avec un biacide,
- du chlore stabilisé solide (70 %) avec un bi acide et 20ppm de stabilisant,
- du chlore liquide (13 %) avec de l'acide chlorhydrique,
- du chlore liquide (13 %) avec de l'acide sulfurique,
- du chlore liquide (13 %) avec de l'acide chlorhydrique et 20ppm de stabilisant,
- du chlore liquide (13 %) avec de l'acide sulfurique et 20ppm de stabilisant,
- du chlores liquide (13 %) avec un biacide,
- du chlore liquide (13 %) avec un biacide et 20ppm de stabilisant,
- du chlore liquide (9 %) avec de l'acide chlorhydrique,
- du chlore liquide (9 %) avec de l'acide sulfurique,
- du chlores liquide (9 %) avec de l'acide chlorhydrique,
- un électrolyseur (NaCl) avec de l'acide chlorhydrique,
- un électrolyseur (NaCl) avec de l'acide sulfurique,
- un électrolyseur (NaCl) avec de l'acide sulfurique et 20ppm de stabilisant,
- un électrolyseur (NaCl) avec de l'acide chlorhydrique et 20ppm de stabilisant,
- un électrolyseur (NaCl) avec un biacide,
- un électrolyseur (NaCl) avec un biacide et 20ppm de stabilisant, et
- traitement à l'ozone.

Le type de traitement de l'eau récupéré permet d'estimer la quantité de renouvellement de l'eau nécessaire pendant la plage de temps donnée sur la base des préconisations des fournisseurs des produits de traitement et donc la consommation en eau liée à ce renouvellement.

En plus de l'information sur la présence ou non d'un système de pilotage automatisé du bassin, ces différentes informations permettent donc de fournir à la fois la quantité d'eau utilisée pour l'entretien du filtre et pour le renouvellement d'eau liée à son traitement. Cette manière, l'estimation de la consommation d'eau du bassin prend également en compte la quantité d'eau perdue par le traitement de l'eau du bassin et pour sa filtration.

De cette manière, il est possible d »estimé dans le cadre de l'étape K. de la quantité d'eau perdue dans le cadre de l'entretien du bassin et les besoin de renouvellement d'eau liée à son traitement.

Lors de l'étape L. de fourniture d'une estimation de la consommation d'eau, il peut être fournie une estimation de la consommation d'eau du bassin sur la plage de temps donnée. Dans une configuration usuelle de l'invention, compte tenu des incertitudes liées au variation météorologique et du manque de précisions sur certaines des informations récoltées, tels que la fréquentation moyenne, l'estimation de la consommation d'eau fournie peut être sous la forme d'une plage de consommation estimée. Ainsi, le présent procédé peut indiquer dans le cadre de l'étape L. les bornes basses et hautes d'une consommation d'eau estimée pour le bassin à partir des différentes informations récupérées :
- l'une correspondant à l'addition des valeurs basses des consommations estimée auxquelles sont retranchées les valeurs hautes de l'eau récupérable, ceci pour la plage de temps donnée et
- L'autre correspondant à l'addition des valeurs hautes des consommations estimée auxquelles sont retranchées les estimations basses de l'eau récupérable pour le bassin, ceci pour la plage de temps donnée.

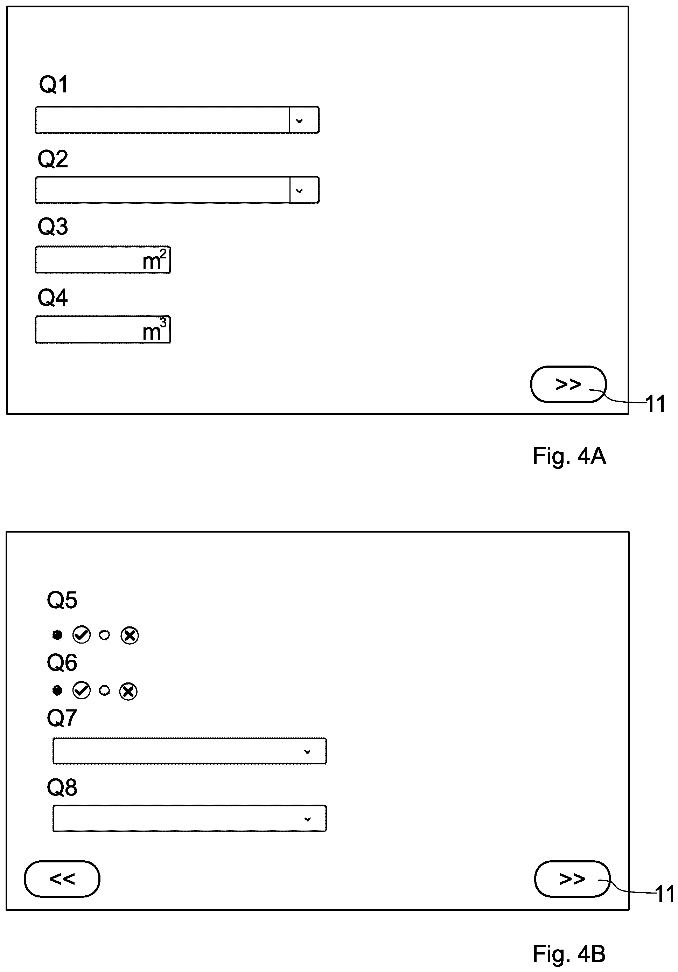

Bien entendu, dans le cadre l'étape L., il peut également être fourni plusieurs types de valeurs de consommation d'eau. Ainsi dans le présent mode de réalisation, comme cela est décrit ci-après en lien avec les figures 4A à 4F, il peut être fourni :
- les estimations basse et haute de la consommation du bassin sur la plage de temps donnée, et
- les estimations basse et haute de la consommation du bassin sur la plage de temps donnée incluant le premier remplissage du bassin.

Ces informations permettent ainsi à l'installateur, le propriétaire, les copropriétaires, ou le gestionnaire, d'être informés à la fois de l'empreinte écologique et économique en eau estimée de l'installation de son bassin la première année et l'empreinte écologique en eau estimée annuelle pour les années suivantes. De même, ces estimations fournies par le présent procédé peuvent également être utilisées pour définir l'opportunité de changer ou ajouter un équipement au bassin, tel qu'une couverture ou un système de récupération des eaux de lavage/contre lavages, puisqu'il permet directement d'estimer l'influence de ce changement/ajout sur la consommation en eaux du bassin.

On notera qu'en outre l'estimation de la consommation en eau du bassin, lors de l'étape L. il peut être fourni des informations complémentaires sur la consommation en eau, telles que par exemple :
- l'estimation de l'eau évaporée sans couverture,
- l'estimation de la consommation en eau liée au filtrage,
- l'estimation de la consommation en eau liée à la baignade,
- l'estimation de la consommation en eau liée à l'hivernage (vidage au moins partielle du bassin pour l'hiver),
- l'estimation de la consommation en eau lié au renouvellement,
- l'estimation de la récupération de l'évaporation de l'eau liée à l'utilisation de la couverture,
- l'estimation de l'eau récupéré par la réutilisation
- l'estimation de l'eau récupéré sur la base de la pluviométrie, et/ou
- l'estimation de l'eau récupéré à partir du trop-plein.

De même, lorsque la plage de temps données est une plage de temps spécifique, le propriétaire, les copropriétaires, ou le gestionnaire sont à même d'estimer les variations de l'empreinte écologique et économique de son bassin entre deux plages de temps spécifiques données. De même, lorsque le bassin est équipé d'un compteur d'eau permettant de connaître la consommation précise du bassin sur ladite plage de temps spécifique, ce propriétaire, ces copropriétaires, ou ce gestionnaire sera à même de comparer une consommation réelle sur cette plage de temps donnée avec la consommation estimée par le présent procédé sur cette même plage de temps et déterminer l'existence d'une éventuelle fuite ou d'une éventuelle source de consommation d'eau inconnue.

De même les estimations obtenues dans le cadre du présent procédé peuvent être utilisées dans le cadre du dimensionnement et la commande du système d'alimentation en eau du bassin. Cela est particulièrement le cas lorsque la plage de temps donnée est une plage de temps spécifique. Ainsi, pour une plage de temps spécifique correspondant à une journée ou à deux jours spécifiques, il est possible de compenser les pertes en eaux estimées basées sur les valeurs de consommation en eau fournies par le présent procédé.

Ainsi, le présent procédé, comme illustré sur la figure 5, peut également comporter, après l'étape de L. de fourniture d'une estimation de la consommation d'eau, l'étape suivante :
M. commande de l'alimentation en eau du bassin basé sur la consommation en eau estimée à l'étape L.

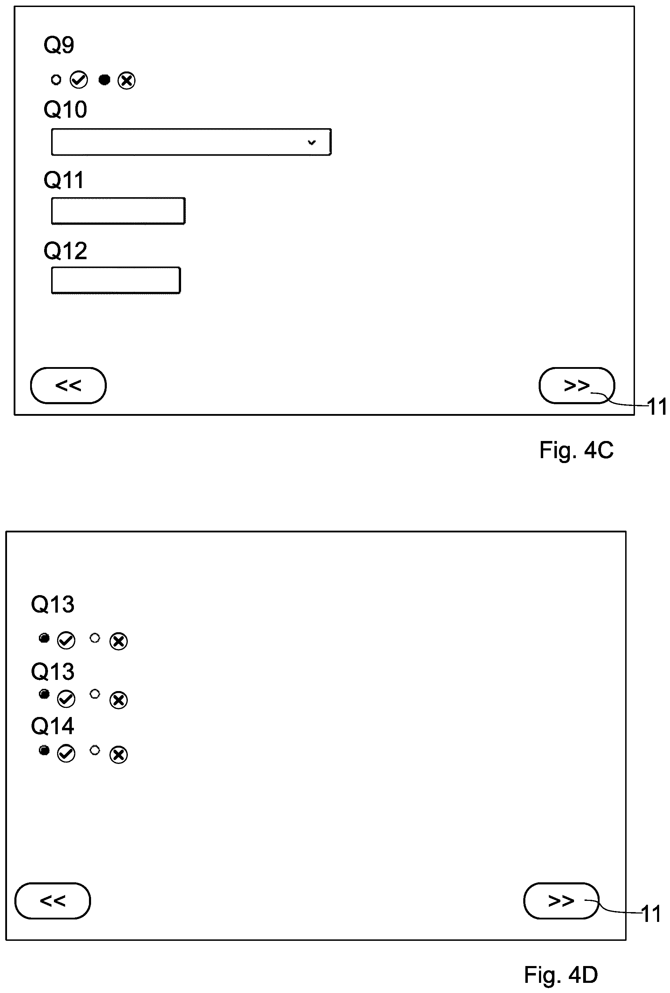

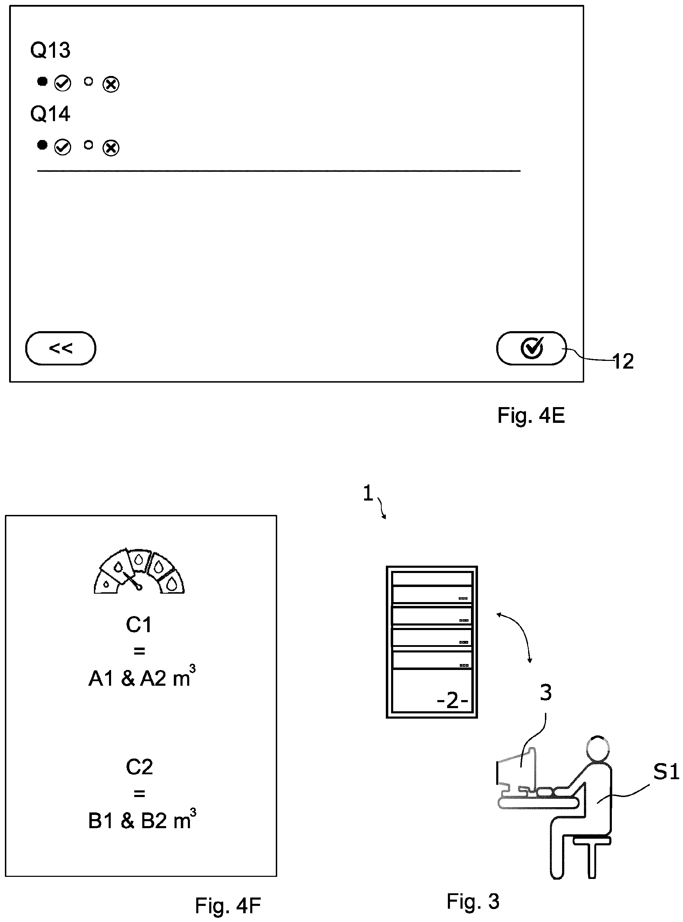

De manière avantageuse, un tel procédé peut être mise en oeuvre par un système 1 d'estimation de la consommation en eau d'un bassin, notamment du type piscine, sur une plage de temps donné, tel qu'illustré sur la figure 4. Un tel système 1 peut comprendre une unité informatique 2, tel qu'un serveur. L'unité informatique 2 peut ainsi être adaptée pour mettre en oeuvre le procédé au moyen d'une unité informatique secondaire 3, tel qu'un ordinateur personnel ou professionnel d'un utilisateur du procédé pour déterminer une consommation d'eau d'un bassin, cet utilisateur pouvant être par exemple un installateur, un propriétaire, des copropriétaires, voire à un gestionnaire du bassin. Pour ce faire, le système peut être apte à fournir des instructions à l'unité informatique secondaire 3 afin de récupérer les informations nécessaires pour la mise en oeuvre du procédé et pour ensuite, une fois que l'estimation de la consommation d'eau du bassin a été déterminée, l'afficher à l'utilisateur.

Ainsi, si on prend l'exemple des étapes A., B., C., D., F., G. et L., l'unité informatique 2 peut être configurée pour :
- fournir des instructions à une unité informatique secondaire 3 de demander des informations dimensionnelles du bassin et du volume d'eau qu'il est destiné à contenir et récupérer les informations dimensionnelles du bassin et du volume d'eau obtenues lors de cette demande,
- fournir des instructions à l'unité informatique secondaire 3 pour demander au moins une information relative à la localisation du bassin et récupérer l'au moins une information relative à la localisation du bassin obtenue lors de cette demande,
- fournir des instructions à l'unité informatique secondaire 3 pour demander au moins une information relative à l'utilisation d'une éventuelle couverture du bassin et récupérer l'au moins une information relative à l'utilisation d'une éventuelle couverture du bassin obtenue lors de cette demande,
- récupérer, à partir de l'au moins une information relative à la localisation du bassin obtenue, d'informations de météorologie relatives à la localisation du bassin, les informations de météorologie incluant des informations de température et des informations de pluviométrie relatives à la plage de temps donnée,
- estimation, sur la plage de temps donnée, d'une quantité d'eau perdue par évaporation du bassin sur la base des informations dimensionnelles, des informations de température et de l'information relative à l'utilisation de l'éventuelle couverture,
- estimation d'une quantité d'eau de pluie ajoutée au bassin pour une plage de temps donnée sur la base des d'informations dimensionnelles et des informations de pluviométrie,
- détermination d'une estimation de la consommation d'eau du bassin sur la plage de temps donnée, ladite estimation de la consommation est réalisée à partir de l'estimation de la quantité évaporable du bassin à partir de la quantité d'eau évaporable estimée et de la quantité d'eau de pluie ajoutée estimée,
- fournir des instructions à l'unité informatique secondaire 3 pour afficher l'estimation de la consommation d'eau du bassin sur la plage de temps donnée déterminée.

Bien entendu, si cet exemple ci-dessus n'intègre que étapes A., B., C., D., F., G. et L.,

De manière avantageuse, les instructions fournies à l'unité informatique secondaire 3 au moyen d'un protocole de communication à distance, tel que le protocole de transfert hypertexte, plus connu sous son sigle HTTP, en utilisant avantageusement un langage html ou du javascript. Ainsi, l'unité informatique peut par exemple héberger une page internet sur laquelle se connecte l'utilisateur au moyen de son unité informatique secondaire.

Les figures 4A à 4F illustre un exemple de réalisation du présent mode de réalisation dans lequel le procédé d'estimation est mis en oeuvre au moyen de pages internet figurant un questionnaire afin d'obtenir les informations relatives au bassin.

Ainsi, lorsqu'il se connecte au moyen de son unité informatique secondaire, l'utilisateur, après s'être connecté au moyen par exemple d'un compte dédié, peut arriver sur la page illustrée sur la figure 4A qui a pour objet les informations générales concernant le bassin. Cette page comprendre les rubriques suivantes :
- Q1 : où se trouve le projet de piscine ? cette rubrique ouvrant un menu déroulant permettant de sélectionner le département dans lequel se trouve ou sera situé le bassin,
- Q2 Sélectionnez la ville correpondante où la ville la plus proche du lieu de construction de la piscine, cette rubrique ouvrant un menu déroulant permettant de sélectionner la ville où se trouve, ou où sera situé, le bassin,
- Q3 :quelle est la surface de la piscine en mètres carrés ?, cette rubrique permettant de rentrer la faveur de la surface du bassin,
- Q4 : quel est le volume de la piscine en mètres cubes ?, cette rubrique permettant de rentrer la valeur du volume d'eau que contient, ou qu'est destiné à contenir, le bassin.

Après avoir validé en appuyant sur le bouton suivant 11, l'utilisateur arrivera sur la page illustrée sur la figure 4B qui a pour objet des équipements du bassin. Cette page comprend les rubriques suivantes :
- Q5 : la piscine est-elle équipée d'une couverture ?, Cette rubrique permettant d'indiquer la présence d'une couverture pour le bassin,
- Q6 : la piscine est-elle équipée d'un système de chauffage ?, Cette rubrique permettant d'indiquer la présence ou non d'un système chauffage,
- Q7 : quel type de filtre équipe la piscine ? cette rubrique permettant d'indiquer le type de traitement de filtrage qui est prévu pour le bassin,
- Q8 : quel type de traitement de l'eau est-il mis en oeuvre ?, Cette rubrique permettant d'indiquer le type de traitement de l'eau qui prévu bassin.

Après avoir validé en appuyant sur le bouton suivant 11, utilisateur arrivera sur la page illustrée sur la figure 4C qui a pour objet la suite des équipements du bassin. Cette page comprend les rubriques suivantes :
- Q9 : abaissez-vous le niveau d'eau en hiver ? Cette rubrique permettant d'indiquer si le bassin fait l'objet d'un abaissement (voire un vidage complet) de la quantité d'eau pour l'hivernage,
- Q 10 : estimer le nombre de jours d'utilisation de la piscine de mai à septembre ? Cette rubrique permet sous la forme d'un menu déroulant indiquer le nombre de jours par semaine pendant lesquelles la piscine est utilisée pendant la période allant de mai à septembre,
- Q 11 : combien d'heures par jour votre bassin est-il découvert (sans la couverture) ? Cette rubrique permet de sous la forme d'un menu déroulant indiquer le nombre heures pendant lesquelles la piscine est découverte, c'est-à-dire non équipé de la couverture,
- Q 12 : quel est l'hypothèse du nombre de personnes profitant de la piscine ? Cette rubrique permet indiquer le nombre moyen d'usagers profitant du bassin par jour d'utilisation.

Après avoir validé en appuyant sur le bouton suivant 11, utilisateur arrivera sur la page illustrée sur la figure 4D qui a pour objet les possibilités de récupération des eaux par le bassin. Cette page comprend les rubriques suivantes :
- Q13 : la piscine est-elle équipée d'un récupérateur d'eau des contre lavages/lavages ? Cette rubrique permettant d'indiquer si le bassin présente une telle possibilité de récupération des eaux de lavage/contre lavages,
- Q 14 : disposez-vous d'un système de récupération des eaux de pluie destinée à alimenter votre piscine en eau ? Cette rubrique permettant d'indiquer s'il est prévu un système de récupération des eaux de pluie pour alimenter le bassin, un tel système offrant une récupération allant au-delà de la seule surface du bassin,
- Q 15 : la piscine est-elle équipée d'un trop-plein ? Cette rubrique permettant d'indiquer si le bassin comporte un trop-plein, un tel trop-plein permettant de réguler le volume d'eau dans le bassin.

Après avoir validé en appuyant sur le bouton suivant 11, utilisateur arrivera sur la page illustrée sur la figure 4E qui a pour objet les informations complémentaires relatifs au bassin. Cette page comprend les rubriques suivantes :
- Q16 : la piscine est-elle équipée d'un système de pilotage automatique ? Cette rubrique permettant d'indiquer si la piscine est équipée d'un système de pilotage, ce type de système de pilotage permettant d'optimiser la consommation d'eau du bassin,
- Q 17 : renouvelez-vous chaque année une partie de l'eau de la piscine (hors ajout lié à : l'évaporation, l'entretien du filtre et l'abaissement de mutuel niveau d'eau en hiver) ? Cette rubrique permettant d'informer sur l'habitude de renouvellement de l'eau du bassin.

Une fois l'ensemble des informations fournies et validé par l'appui du bouton de validation 12 , l'unité informatique 2 peut déterminer, conformément au procédé selon l'invention explicité dans le présent document, une estimation de la consommation du bassin et donner les instructions pour afficher cette information. Dans le cas de cet exemple de réalisation du présent mode de réalisation, il est affiché à l'utilisateur la fenêtre illustrée sur la figure 4F.

Dans le cadre de cette fenêtre dans le cadre du présent procédé il est indiqué :
- une indication graphique 10 du classement en terme de consommation en eau du présent bassin, cette indication montrant que le présent bassin présente une consommation estimée moyennement faible (2/5) vis-à-vis d'une consommation moyenne qui correspondrait à l'indication du milieu (c'est-à-dire 3/5),
- l'indication C1 suivante : « consommation annuelle théorique hors premier remplissage »
- les valeur A1 et A2 correspondant aux valeurs estimées basse et haute de la consommation du bassin sur la plage de temps donnée (dans le présent cas les estimation annuelle)
- l'indication C2 suivante : « consommation annuelle théorique avec premier remplissage »,
- les valeur A1 et A2 correspondant aux valeurs estimées basse et haute de la consommation du bassin sur la plage de temps donnée incluant le premier remplissage du bassin(dans le présent cas les estimation annuelle).

Bien entendu cet exemple de réalisation est fourni qu'à titre indicatif et est nullement limitatif de la forme de mise en oeuvre du présent procédé que ce soit dans le cadre du présent mode de réalisation ou dans le cadre des différentes variantes décrites.

## Revendications

1. Procédé d'estimation de la consommation en eau d'un bassin, notamment du type piscine, sur une plage de temps donnée, ledit procédé étant mis en oeuvre par ordinateur, comprenant les étapes suivantes :
A récupération d'informations dimensionnelles du bassin et du volume d'eau qu'il est destiné à contenir,
B récupération d'au moins une information relative à la localisation du bassin,
C récupération d'au moins une information relative à l'utilisation d'une éventuelle couverture du bassin,
D récupération, à partir de l'au moins une information relative à la localisation du bassin, d'informations de météorologie relatives à la localisation du bassin, les informations de météorologie incluant des informations de température et des informations de pluviométrie relatives à la plage de temps donnée,
F estimation, sur la plage de temps donnée, d'une quantité d'eau perdue par évaporation du bassin sur la base des informations dimensionnelles, des informations de température et de l'information relative à l'utilisation de l'éventuelle couverture,
G estimation d'une quantité d'eau de pluie ajoutée au bassin pour une plage de temps donnée sur la base des d'informations dimensionnelles et des informations de pluviométrie,
L. fourniture d'une estimation de la consommation d'eau du bassin sur la plage de temps donnée, ladite estimation de la consommation est réalisée à partir de la quantité d'eau évaporable estimée et de la quantité d'eau de pluie ajoutée estimée.

2. Procédé d'estimation selon la revendication 1, dans lequel, préalablement à l'étape de la fourniture de l'estimation de consommation d'eau, le procédé d'estimation comprend les étapes suivantes :
H. récupération d'une information relative à une fréquentation du bassin,
I. estimation d'une quantité d'eau perdue lors de l'utilisation pendant la plage de temps donnée basé sur la fréquentation d'utilisation du bassin,
dans lequel pour l'étape L. de fourniture de l'estimation de la consommation d'eau du bassin sur la plage de temps donnée, ladite estimation de la consommation est en outre réalisée à partir de l'estimation de la quantité d'eau perdue lors de l'utilisation du bassin.

3. Procédé d'estimation selon la revendication 1 ou 2, dans lequel, préalablement à l'étape de la fourniture de l'estimation de consommation d'eau, le procédé d'estimation comprend les étapes suivantes :
J. récupération d'une information relative au traitement de l'eau mis en oeuvre dans le cadre de l'entretien du bassin,
K. estimation des besoins de renouvellement de l'eau du bassin sur la base des informations relative au traitement de l'eau,
dans lequel pour l'étape K. de fourniture de l'estimation de la consommation d'eau du bassin sur la plage de temps donnée, ladite estimation de la consommation est en outre réalisée à partir de l'estimation de la quantité d'eau perdue lors de l'utilisation du bassin.

4. Procédé d'estimation selon la revendication 3, dans lequel l'étape J. récupération d'une information relative au traitement de l'eau comprend au moins l'une des informations suivantes :
- l'utilisation d'un système de filtration d'eau, cette information incluant préférentiellement le type de filtre et les caractéristiques associées à ce filtre,
- un type de traitement de l'eau en tant que tel,
- la présence ou non d'un système de pilotage automatisé, et/ou
- le renouvellement d'au moins une partie de l'eau du bassin pendant la plage de temps donnée, ce renouvellement excluant les ajoutent au lié à l'évaporation, l'entretien du filtre, l'abaissement du niveau d'eau en hiver, et
- la réalisation d'un abaissement du niveau d'eau en hiver.

5. Procédé d'estimation selon l'une quelconque des revendications 1 à 4, dans lequel préalablement à l'étape F. d'estimation, sur la plage de temps donnée, d'une quantité d'eau perdue par évaporation du bassin, le procédé d'estimation comprend les étapes suivantes :
E. récupération d'une information relative à l'utilisation d'un système de chauffe du bassin pendant la plage de temps donnée,
Dans lequel, lors de l'étape F., d'estimation, sur la plage de temps donnée, d'une quantité d'eau perdue par évaporation du bassin, l'estimation est également basée sur l'information relative à l'utilisation d'un système de chauffe du bassin pendant la plage de temps donnée.

6. Procédé d'estimation selon l'une quelconque des revendications 1 à 5, dans lequel, après l'étape L. de fourniture d'une estimation de la consommation d'eau du bassin sur la plage de temps donnée, le procédé comprend en outre une étape supplémentaire de :
M. commande de l'alimentation en eau du bassin basé sur la consommation en eau estimée à l'étape L.

7. Produit programme comprenant du code information configuré pour mettre en oeuvre les étapes d'un procédé de détermination selon l'une quelconque des revendications 1 à 6, le produit programme comportant des instructions pour réaliser les étapes suivantes : :
A récupération d'informations dimensionnelles du bassin et du volume d'eau qu'il est destiné à contenir,
B récupération d'une information relative à la localisation du bassin,
C récupération d'au moins une information relative à l'utilisation d'une éventuelle couverture du bassin,
D récupération, à partir de l'au moins une information relative à la localisation du bassin, d'informations de météorologie relatives à la localisation du bassin, les informations de météorologie incluant des informations de température et des informations de pluviométrie relatives à la plage de temps donnée,
F estimation, sur la plage de temps donnée, d'une quantité d'eau perdue par évaporation du bassin sur la base des informations dimensionnelles, des informations de température et de l'information relative à l'utilisation de l'éventuelle couverture,
G estimation d'une quantité d'eau de pluie ajoutée au bassin pour une plage de temps donnée sur la base des d'informations dimensionnelles et des informations de pluviométrie,
L. fourniture d'une estimation de la consommation d'eau du bassin sur la plage de temps donnée, ladite estimation de la consommation est réalisée à partir de l'estimation de la quantité évaporable du bassin à partir de la quantité d'eau évaporable estimée et de la quantité d'eau de pluie ajoutée estimée

8. Support d'enregistrement informatique lisible par un ordinateur stockant le produit programme selon la revendication 7.

9. Système (1) d'estimation de la consommation en eau d'un bassin, notamment du type piscine, sur une plage de temps donnée, le système (1) comprenant une unité informatique (2) configurée pour :
- fournir des instructions à une unité informatique secondaire (3) de demander des informations dimensionnelles du bassin et du volume d'eau qu'il est destiné à contenir et récupérer les informations dimensionnelles du bassin et du volume d'eau obtenues lors de cette demande,
- fournir des instructions à l'unité informatique secondaire (3) pour demander au moins une information relative à la localisation du bassin et récupérer I »au moins une information relative à la localisation du bassin obtenue lors de cette demande,
- fournir des instructions à l'unité informatique secondaire (3) pour demander au moins une information relative à l'utilisation d'une éventuelle couverture du bassin et récupérer l'au moins une information relative à l'utilisation d'une éventuelle couverture du bassin obtenue lors de cette demande,
- récupérer, à partir de l'au moins une information relative à la localisation du bassin obtenue, d'informations de météorologie relatives à la localisation du bassin, les informations de météorologie incluant des informations de température et des informations de pluviométrie relatives à la plage de temps donnée,
- estimation, sur la plage de temps donnée, d'une quantité d'eau perdue par évaporation du bassin sur la base des informations dimensionnelles, des informations de température et de l'information relative à l'utilisation de l'éventuelle couverture,
- estimation d'une quantité d'eau de pluie ajoutée au bassin pour une plage de temps donnée sur la base des d'informations dimensionnelles et des informations de pluviométrie,
- détermination d'une estimation de la consommation d'eau du bassin sur la plage de temps donnée, ladite estimation de la consommation est réalisée à partir de l'estimation de la quantité évaporable du bassin à partir de la quantité d'eau évaporable estimée et de la quantité d'eau de pluie ajoutée estimée,
- fournir des instructions à l'unité informatique secondaire (3) pour afficher l'estimation de la consommation d'eau du bassin sur la plage de temps donnée déterminée.

10. Système (1) selon la revendication 9, dans lequel l'unité informatique (2) est configurée pour fournir les instructions à l'unité informatique secondaire (3) au moyen d'un protocole de communication à distance, tel que le protocole de transfert hypertexte, plus connu sous son sigle http, en utilisant avantageusement un langage html ou du javascript.
